# EUROPÄISCHE PATENTSCHRIFT

(11) **EP 4 153 384 B1**
(45) Veröffentlichungstag und Bekanntmachung des Hinweises auf die Patenterteilung: **09.08.2023**
(21) Anmeldenummer: 21748614.1
(22) Anmeldetag: 21.07.2021
(51) Int. Cl.: B25J 5/02, B25J 9/00, B25J 9/10, B25J 9/04

(54) **ANGETRIEBENE LINEARACHSE SOWIE INDUSTRIEROBOTER**
DRIVEN LINEAR AXLE AND INDUSTRIAL ROBOT
AXE LINÉAIRE ENTRAÎNÉ ET ROBOT INDUSTRIEL

(30) Priorität: 23.07.2020 DE 102020119499
(43) Veröffentlichungstag der Anmeldung: 29.03.2023
(73) Patentinhaber: Beckhoff Automation GmbH, 33415 Verl (DE)
(72) Erfinder: PEHLIVAN, Armin, 6714 Nüziders (AT); KASTLER, Peter, 1220 Wien (AT); MAIER, Clemens, 6700 Bludenz (AT); MORSCHER, Thomas, 1080 Wien (AT); ZECH, Christoph, 1130 Wien (AT)
(74) Vertreter: Patentanwaltskanzlei WILHELM & BECK
(86) Internationale Anmeldenummer: PCT/EP2021/070435
(87) Internationale Veröffentlichungsnummer: WO 2022/018159

(56) Entgegenhaltungen:
- DE-A1-102007 013 446
- DE-A1-102015 001 865

## Beschreibung

Die Erfindung betrifft eine angetriebene Linearachse als Roboterbasis für einen Roboterarm eines Industrieroboters. Ferner betrifft die Erfindung einen Industrieroboter.

Linearachsen werden in großen Stückzahlen in der Automatisierungstechnik eingesetzt und weisen in der Regel einen von einem Zahnriemen antreibbaren Schlitten auf. Für einen Antrieb des Zahnriemens der Linearachse wird dabei ein externer Elektromotor angewendet, welcher meist über ein Getriebe untersetzt an den Zahnriemen gekoppelt ist. Problematisch ist hierbei, dass der Antrieb, d.h. der Elektromotor bzw. das Getriebe aus der Achse heraussteht und vergleichsweise groß gebaut sind.

Dies ist insbesondere dann von Nachteil, wenn die angetriebene Linearachse als Roboterbasis für einen Industrieroboter eingesetzt werden soll. Durch die Erweiterung mit einer angetriebenen Linearachse als Roboterbasis kann der Industrieroboter zusätzlich lineare Bewegungen durchführen. Um die angetriebene Linearachse dabei optimal in den Industrieroboter zu integrieren, müssen am Schlitten der Linearachse dann auch sämtliche Medien, die der Industrieroboter benötigt, zur Verfügung stehen.

DE 10 2015 001865 A1 beschreibt eine angetriebene Linearachse mit den Merkmalen des Oberbegriffs des Anspruchs 1. Weitere Stand der Technik ist aus der DE 10 2007 013446 A1 bekannt.

Es ist die Aufgabe der Erfindung, eine angetriebene Linearachse als eine Roboterbasis für einen Industrieroboter und einen entsprechenden Industrieroboter bereitzustellen, welche einfach aufgebaut sind und einen nur geringen Platzbedarf besitzen.

Die Aufgabe der Erfindung ist mittels einer angetriebenen Linearachse bzw. eines Industrieroboters gemäß den unabhängigen Patentansprüchen gelöst. Vorteilhafte Weiterbildungen, zusätzliche Merkmale und/oder Vorteile der Erfindung ergeben sich aus den abhängigen Ansprüchen und der folgenden Beschreibung.

Die angetriebene Linearachse besitzt ein Gehäuse, das eine lineare Schienenführung aufweist, auf welcher ein Schlitten mittels einer Transporteinrichtung linear hin- und her bewegbar angeordnet ist. Die Transporteinrichtung umfasst ein im Gehäuse umlaufendes Band, das über zwei Räder geführt ist, wobei wenigstens ein Rad als Antriebsrad ausgebildet ist. Eine Antriebseinrichtung ist dabei innerhalb des Antriebsrads eingerichtet und steht in einer drehmomentschlüssigen Drehverbindung mit dem Antriebsrad.

Gemäß der Erfindung ist im Gegensatz zu Linearachsen aus dem Stand der Technik die Antriebseinrichtung in die Linearachse integriert und benötigt im Wesentlichen keinen zusätzlichen äußeren Bauraum. Die Antriebseinrichtung der Linearachse ist vollständig innerhalb des Antriebsrads für die Transporteinrichtung eingerichtet. Dabei weist die Antriebseinrichtung an ihrem Umfang das Antriebsrad vollumlaufend auf, wobei das Antriebsrad auf der Antriebseinrichtung sitzend eingerichtet ist und durch die Antriebseinrichtung rotiert wird. Die Antriebseinrichtung bildet eine kompakte Antriebspatrone, die einfach und schnell getauscht werden kann. Dies ist insbesondere für den Fall eines Defekts der Antriebseinrichtung oder wenn sich Anforderungen an die Antriebseinrichtung ändern, wenn z. B. eine andere Übersetzung gewünscht ist, von Vorteil.

Die erfindungsgemäße angetriebene Linearachse kann statt sämtlicher herkömmlicher Standard-Linearachsen eingesetzt werden. Zusätzlich bietet sich die Linearachse als Roboterbasis für einen Roboterarm eines Industrieroboters an, um zusätzlich lineare Bewegungen durchführen zu können.

Die Antriebseinrichtung kann eine Lagerachse aufweisen, mittels welcher die Antriebseinrichtung in der Linearachse gehaltert ist. Ferner kann die Antriebseinrichtung eine Elektromotoreinrichtung und eine damit drehmomentschlüssig gekoppelte Getriebeeinrichtung aufweisen. Die Elektromotoreinrichtung und die Getriebeeinrichtung können unmittelbar benachbart zueinander in der Antriebseinrichtung eingerichtet sein. Weiterhin können die Elektromotoreinrichtung und die Getriebeeinrichtung über eine Abtriebswelle der Elektromotoreinrichtung gekoppelt sein. Hierbei kann die Abtriebswelle, ausgehend von einem Rotor der Elektromotoreinrichtung mit einer Eingangsseite der Getriebeeinrichtung drehfest gekoppelt sein. Die Abtriebswelle kann als eine Hohlwelle ausgebildet sein, welche rotierbar auf der Lagerachse aufgenommen ist. Ferner kann eine Ausgangsseite der Getriebeeinrichtung drehfest mit dem Antriebsrad gekoppelt sein. Hierdurch wird ein besonders kompakter Aufbau der Antriebseinrichtung erreicht.

Die Lagerachse kann drehfest in der Linearachse eingerichtet sein. Weiterhin können die Elektromotoreinrichtung und die Getriebeeinrichtung auf der Lagerachse aufgenommen sein. Dabei kann das Antriebsrad rotierbar auf der Lagerachse gelagert sein. Hierfür kann wenigstens ein Radialwälzlager (Rollenlager, Kugellager, Nadellager etc.) oder auch wenigstens ein Radialgleitlager angewendet sein. Ferner kann sich die Ausgangsseite der Getriebeeinrichtung in einer analogen Weise auf der Lagerachse abstützen. Des Weiteren kann sich ein Stator der Elektromotoreinrichtung bevorzugt über ein Radialwälzlager (Rollenlager, Kugellager, Nadellager etc.) oder auch ein Radialgleitlager auf der Hohlwelle abstützen.

Der Schlitten der angetriebenen Linearachse weist eine multifunktionale Schnittstelle auf, welche eine mechanische Schnittstelle und eine Medienschnittstelle beinhaltet, wobei die Medienschnittstelle vorzugsweise eine Datensignal-Schnittstelle, eine elektrische Schnittstelle und eine fluidische Schnittstelle umfasst. Dabei ist innerhalb des Gehäuses wenigstens eine hin- und her bewegbare Medienschleppeinrichtung mit einem Medienpfad, vorzugsweise einen Datensignalpfad zur Datensignal-Schnittstelle, einen Elektropfad zur elektrischen Schnittstelle und einen Fluidpfad vorgesehen, der zur fluidischen Schnittstelle der multifunktionalen Schnittstelle des Schlittens führt.

Wenigstens ein Medium (Träger für eine Ausbreitung eines Signals oder einer physikalischen Erscheinung; optisch, elektrisch, fluidisch), welches auf dem Schlitten insbesondere beim Einsatz als Roboterbasis für einen Roboterarm eines Industrieroboters benötigt wird, wird dabei über die in der Linearachse angebrachte Medienschleppeinrichtung geführt. Die Mediendurchführung erfolgt so im Inneren der Linearachse und benötigt keinen zusätzlichen Platz.

Die multifunktionale Schnittstelle des Schlittens weist eine mechanische Schnittstelle auf, welche ihrerseits die Datensignal-Schnittstelle, die elektrische Schnittstelle und die fluidische Schnittstelle umfasst. Folgende nähere Ausführungen zur multifunktionalen Schnittstelle können auch auf eine mit dieser korrespondierenden multifunktionalen Gegenschnittstelle zutreffen. Hierbei sind die beiden multifunktionalen Schnittstellen, also die Schnittstelle und deren betreffende Gegenschnittstelle, einander zuwendbar und bevorzugt komplementär, d. h. teilkomplementär oder im Wesentlichen vollkomplementär, ausgebildet d. h. schnittstellenkomplementär.

Die multifunktionale Schnittstelle kann als eine schlittenfeste Schnittstelle ausgebildet sein. Hierbei ist die multifunktionale Schnittstelle auf einem Führungskörper des Schlittens vorgesehen.

Die mechanische Schnittstelle der multifunktionalen Schnittstelle kann als eine steckbare, schraubbare, verzahnte, klemmbare und/oder selbsthemmende Schnittstelle ausgebildet sein. Fermer kann die mechanische Schnittstelle einen Anschlag und/oder eine Verzahnung, insbesondere eine stirnseitige Verzahnung, aufweisen. Kommt eine Verzahnung zur Anwendung kann insbesondere eine Hirth-Verzahnung angewendet sein.

Des Weiteren kann die mechanische Schnittstelle ein Gewinde, insbesondere radial au-ßen, ein äußeres oder inneres Umfangsgewinde aufweisen. Hierbei kann das Gewinde oder das Umfangsgewinde als ein selbsthemmendes Gewinde oder Umfangsgewinde ausgebildet sein. Kommt ein Umfangsgewinde zur Anwendung, kann insbesondere ein mehrgängiges Umfangsgewinde angewendet sein. Darüber hinaus kann die mechanische Schnittstelle als eine von einer Kontaktierungsvorrichtung, insbesondere einem Kontaktierungsring, wenigstens mechanisch kontaktierbare Schnittstelle ausgebildet sein.

Die Datensignal-Schnittstelle, die elektrische Schnittstelle und die fluidische Schnittstelle können radial innerhalb der mechanischen Schnittstelle eingerichtet sein. Hierbei kann die Datensignal-Schnittstelle auf einer zentralen Achse der mechanischen Schnittstelle vorgesehen sein. Ferner können die elektrische Schnittstelle und die fluidische Schnittstelle radial außerhalb der Datensignal-Schnittstelle vorgesehen sein. Des Weiteren kann die fluidische Schnittstelle wenigstens abschnittsweise radial außerhalb der elektrischen Schnittstelle vorgesehen sein.

Die multifunktionale Schnittstelle kann eine durch eine Kreisform begrenzte Anschlussseite umfassen. Hierbei kann die Anschlussseite die mechanische Schnittstelle an ihrem radialen Außenrand aufweisen. Ferner kann die Anschlussseite separat am Schlitten ausgebildet oder wenigstens teilweise durch den Schlitten ausgebildet sein. Des Weiteren kann die Anschlussseite einteilig oder mehrteilig ausgebildet sein. Darüber hinaus kann die Anschlussseite als eine Anschlussscheibe oder eine Anschlussbuchse ausgebildet sein.

Innerhalb der Linearachse können als Medienpfad ein Datensignalpfad, ein Elektropfad und/oder ein Fluidpfad eingerichtet sein, welche zur multifunktionalen Schnittstelle des Schlittens führen. Hierbei kann der betreffende Pfad an einem jeweiligen äußeren Anschluss an der Linearachse beginnen oder der betreffende Pfad wird z. B. in Form von Leitungen in die Linearachse hineingeführt. Mittels der wenigstens einen Medienschleppeinrichtung sind ein hin- und her bewegbarer Datensignalpfad, ein hin- und her bewegbarer Elektropfad und/oder ein hin- und her bewegbarer Fluidpfad in der Linearachse zur multifunktionalen Schnittstelle geschützt führbar. Mittels der Medienschleppeinrichtung sind flexible optische, elektrische, pneumatische und/oder hydraulische Leitungen unter Einhaltung, d. h. einer Nichtunterschreitung, eines kleinsten zulässigen Biegeradius der Leitungen führbar.

Der erfindungsgemäße Industrieroboter umfasst einen Roboterarm, insbesondere einen modularen Roboterarm, und die angetriebenen Linearachse, wobei der Roboterarm mechanisch an die Schlitten der angetriebenen Linearachse angeschlossen ist und optisch, elektrisch und/ oder fluidisch mit dem Schlitten der angetriebenen Linearachse verbunden ist.

Der Roboterarm kann eine Mehrzahl von Armmodulen aufweisen. Hierbei kann ein Armmodul als ein aktives Armmodul ausgebildet sein, mittels welchem ein daran angeschlossenes weiteres Armmodul rotierbar ist. Dieses weitere Armmodul kann als ein aktives oder passives Armmodul ausgebildet sein. Ferner kann ein Armmodul als ein passives Armmodul ausgebildet sein, welches z. B. als ein Verlängerungsteil und/oder Lageänderungsteil innerhalb des Roboterarms dient.

Das Gehäuse des Armmoduls weist bevorzugt eine erste Anschlussseite stirnseitig und eine zur Anschlussseite versetzt angeordnete zweite Anschlussseite auf. Die Anschlussseiten sind bevorzugt korrespondierend miteinander ausgebildet.

Ein Armmodul kann derart ausgebildet sein, dass über dessen erste Anschlussseite und/oder über dessen zweite Anschlussseite hinweg, ein Datensignal, einen elektrischen Strom bzw. eine elektrische Spannung, und/oder ein Fluid mit dem weiteren Armmodul austauschbar ist, wobei die erste Anschlussseite mechanisch, signaltechnisch, elektrisch und/oder fluidisch mit der zweiten Anschlussseite verbunden ist.

Die erste Anschlussseite und/oder die zweite Anschlussseite können drehfest am betreffenden Armmodul eingerichtet sein. Die erste Anschlussseite kann bei einem aktiven Armmodul um eine Rotationsachse rotierbar eingerichtet sein, so dass die erste Anschlussseite relativ gegenüber der Anschlussseite um die Rotationsachse steuerbar verdrehbar ist.

Die Erfindung ist im Folgenden anhand von Ausführungsbeispielen unter Bezugnahme auf die beigefügte schematische und nicht maßstabsgetreue Zeichnung näher erläutert.

In den Figuren zeigen:
Fig. 1 in einer Perspektivansicht von schräg oben, ein Ausführungsform einer angetriebenen Linearachse;
Fig. 2 die angetriebene Linearachse aus Fig. 1 in einer seitlich offenen, dreidimensionalen Darstellung von schräg oben;
Fig. 3 eine Detaildarstellung der Linearachse aus Fig. 1, wobei die angetriebene Linearachse in einem Bereich einer integrierten Antriebseinrichtung stirnseitig und zentral geschnitten dargestellt ist;
Fig. 4 in einer zentral geschnittenen, zweidimensionalen Seitenansicht, eine Ausführungsform einer Antriebseinrichtung für die angetriebene Linearachse gemäß Fig. 1 bis 3;
Fig. 5 die Antriebseinrichtung aus Fig. 4 in einer dreidimensionalen Ansicht;
Fig. 6 in einer dreidimensionalen Draufsicht von schräg oben, eine als Anschlussbuchse ausgebildete Anschlussseite für einen Schlitten der angetriebene Linearachse gemäß Fig. 1 bis 3;
Fig. 7 in einer dreidimensionalen Draufsicht von schräg oben, eine als Anschlussscheibe ausgebildete Anschlussseite für den Schlitten der angetriebene Linearachse gemäß Fig. 1 bis 3; und
Fig. 8 in einer dreidimensionalen Seitenansicht, ein Ausführungsform eines modularen Industrieroboters mit einer angetriebene Linearachse gemäß Fig. 1 bis 3.

Die Darstellung bezieht sich auf ein orthogonales Koordinatensystem mit einer Hochrichtung Hr, einer Längsrichtung Lr und einer Querrichtung Qr.

Die Erfindung wird anhand einer Ausführungsform einer angetriebenen Linearachse, die als Roboterbasis eines Roboterarms, insbesondere eines modularen Roboterarms dient, näher erläutert. Die angetriebene Linearachse ist aber nicht auf diese Einsatzmöglichkeit eingeschränkt.

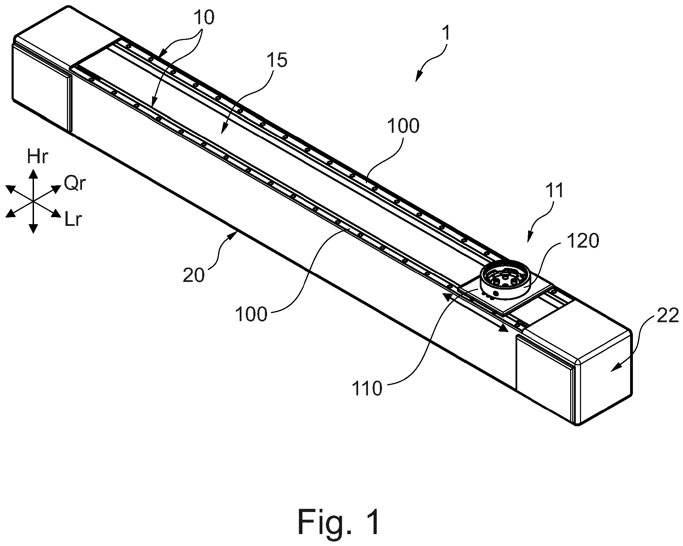

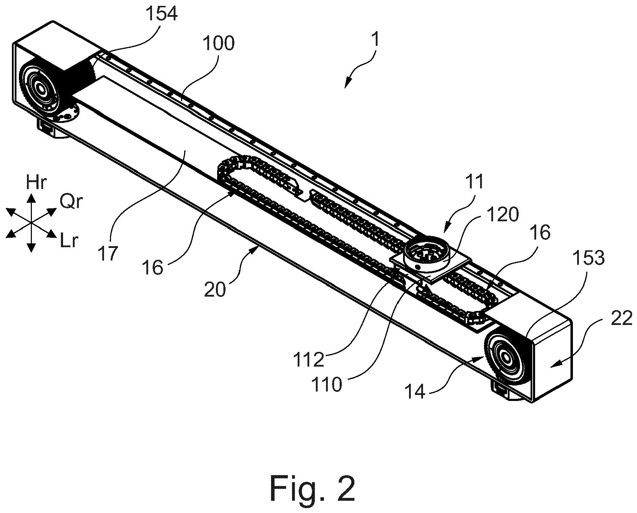

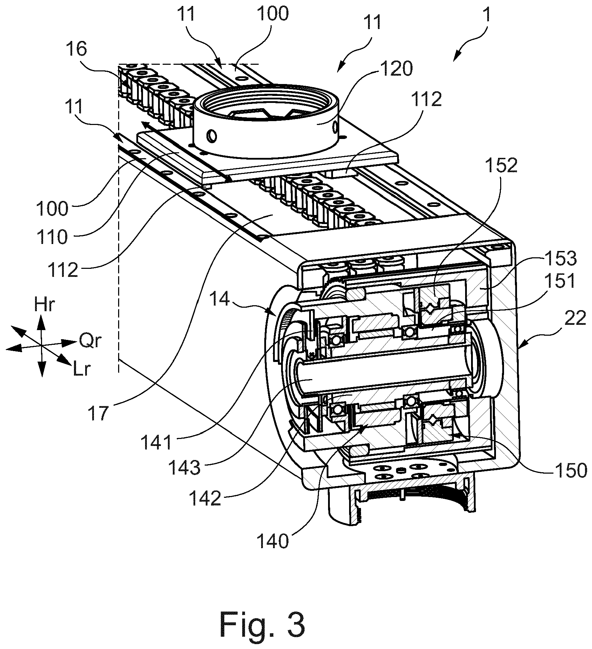

Die Fig. 1 zeigt die angetriebene Linearachse in einer Perspektivansicht von schräg oben. In Fig. 2 ist die Perspektivenansicht aus Fig. 1 in einer seitlich offenen Darstellung, um Details deutlich zu machen, gezeigt. Ferner ist in Fig. 3 ein Endabschnitt der angetriebene Linearachse stirnseitig und zentral geschnitten dargestellt.

Wie Fig. 1 zeigt, umfasst die angetriebene Linearachse 1 ein längliches Gehäuse 20 mit einer linearen Schienenführung 10 oben auf dem Gehäuse 20, die zwei Profilschienen 100 umfasst. Zwischen den Profilschienen 100 ist ein linear hin- und her bewegbarer Schlitten 11 vorgesehen, der eine multifunktionale Schnittstelle 120 aufweist.

Der Schlitten 11 weist, wie insbesondere Fig. 3 verdeutlicht, an einer Unterseite einen Führungskörpers 110 mit zwei seitlichen Laufwagen 112 auf, mittels welchen der Schlitten 11 zwischen den Profilschienen 100 gerade und insbesondere gleitgelagert geführt ist. Die Laufwagen 112 können auch seitlich in den Führungskörper 110 integriert sein. Der Führungskörper 110 und die Laufwagen 112 können mehrteilig ausgelegt sein. Alternativ können der Führungskörper 110 und die seitlichen Laufwagen 112 stofflich einstückig oder integral ausgebildet sein.

Der Schlitten 11 besitzt zwei wesentliche translatorische Freiheitsgrade in Längsrichtung Lr. Jede Profilschiene 100 weist, wie Fig. 3 zeigt, innen ein in Querrichtung Qr profiliertes Formschlussprofil auf, zu welchem der betreffende Laufwagen 110 an einem komplementären Formschlussprofil angeordnet ist.

Der Schlitten 11 ist von einer Transporteinrichtung bewegbar, die vorliegend als langgestrecktes, angenähert O-förmiges Band vorzugsweise als Zahnriemen 15 ausgebildet ist. Der Zahnriemen 15 ist ein langgestrecktes umlaufendes Band mit Zahnung, von dem in Fig. 1 die obere Lage gezeigt ist. Statt dem Zahnriemen 15 ist auch eine anders geartete Band einsetzbar.

Der Zahnriemen 15 wird über zwei gezahnte Räder 153, 154 geführt, die in Fig. 2 gezeigt sind. Das eine Rad ist dabei als Antriebsrad 153 und das andere Rad als Laufrad 154 ausgebildet ist. Es können alternativ aber auch beider Räder Antriebsräder sein. Das Antriebsrad 153 steht in einer drehmomentschlüssigen, insbesondere einer festen Drehverbindung, mit einer Antriebseinrichtung 14 der angetriebenen Linearachse 1. Die Antriebseinrichtung 14 und das Antriebsrad 153 sind dabei in einem Antriebsgehäuseabschnitt 22 des Gehäuses 20 der Linearachse 1 eingerichtet, welches insbesondere einen betreffenden Längsendabschnitt des Gehäuses 20 bildet.

Auf dem Antriebsrad 153 sitzt, wie Fig. 3 verdeutlicht, der Zahnriemen 15 mit einer Schlaufe. Das Antriebsrad 153 weist eine Außenverzahnung auf, welche mit einer dazu komplementären Innenverzahnung des Zahnriemens 15 korrespondiert.

Ferner weist, wie Fig. 2 zeigt, die angetriebene Linearachse 1 wenigstens eine hin- und her bewegbare Medienschleppeinrichtung auf, die in der gezeigten Ausführungsform aus zwei Schleppketten 16 gebildet ist. Die Medienschleppeinrichtung kann auch nur eine Schleppkette oder auch noch weitere Schleppketten aufweisen. Die beiden Schleppketten 16 sind zwischen der oberen und der unteren Lage des Zahnriemens 15 im Gehäuse 20 der Linearachse 1 eingerichtet. Hierbei liegen die Schleppketten 16 auf einer plattenförmigen Einrichtung 17 auf, die seitlich innen am Gehäuse 20 befestigt ist. Mittels der zwei Schleppketten 16 sind Medienpfade so z.B. ein Datensignalpfad, ein Elektropfad und ein Fluidpfad in der Linearachse 1 hin- und her bewegbar eingerichtet und zur multifunktionalen Schnittstelle 120 geschützt führbar. Die Schleppketten 16 sind derart eingerichtet, dass ein minimaler Biegeradius einer bestimmten Ausgestaltung des Medienpfads nicht unterschritten wird.

Die beiden Schleppketten 16 sind einander entgegengesetzt gekrümmt und liegen einander in Längsrichtung Lr gegenüber auf der plattenförmigen Einrichtung 17. Bevorzugt an einer Querseite, insbesondere in Längsrichtung Lr hauptsächlich oder im Wesentlichen mittig, führt der betreffende Pfad in die jeweilige Schleppkette 16 über eine Ausnehmung (nicht gezeigt) in der plattenförmigen Einrichtung 17. Die betreffende Schleppkette 16 führt davon ausgehend zunächst in Richtung eines Längsendes der Linearachse 1 bis zu einem Bereich, in welchem sie sich auf die entgegengesetzte Querseite krümmt und zurück in Richtung des Schlittens 11 führt. Unterhalb des Schlittens 11 führt die Medienpfade der Schleppketten 16 zur multifunktionalen Schnittstelle 120 des Schlittens 11.

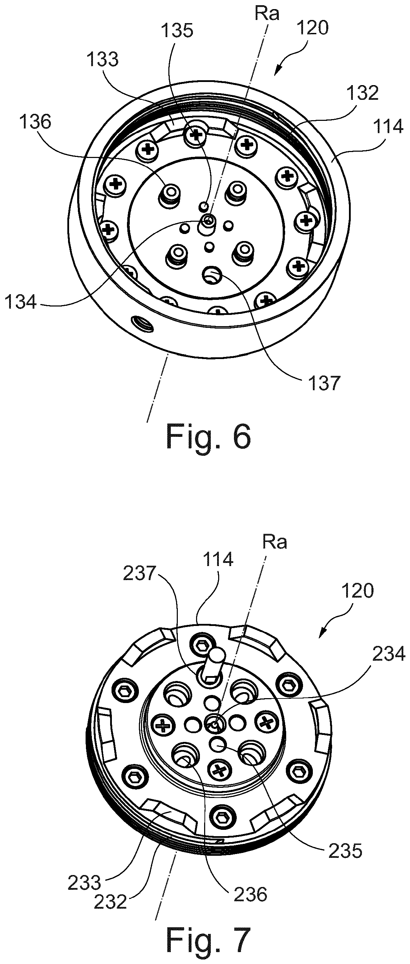

Die multifunktionale Schnittstelle 120 des Schlittens 11 weist eine Anschlussseite 114 auf. Die Anschlussseite 114 kann, wie Fig. 3 und Fig. 6 zeigt, als eine Anschlussbuchse für eine Anschlussscheibe ausgebildet sein. Alternativ kann die Anschlussseite 114, wie Fig. 7 zeigt, als eine Anschlussscheibe für eine Anschlussbuchse ausgebildet sein. Die Anschlussseite kann dabei aber eine beliebige Kontaktierungsmimik aufweisen. Die Anschlussseite 114 der multifunktionale Schnittstelle 120 ist dabei grundsätzlich so ausgestaltet, dass die Anschlussseite 114 der multifunktionale Schnittstelle 120 mit einer Anschlussschlussseite eines Abnehmers für die Medien, die über die Medienpfade in den Schleppketten 16 zur multifunktionale Schnittstelle 120 des Schlittens 11 geführt werden, korrespondiert und miteinander verbunden werden kann.

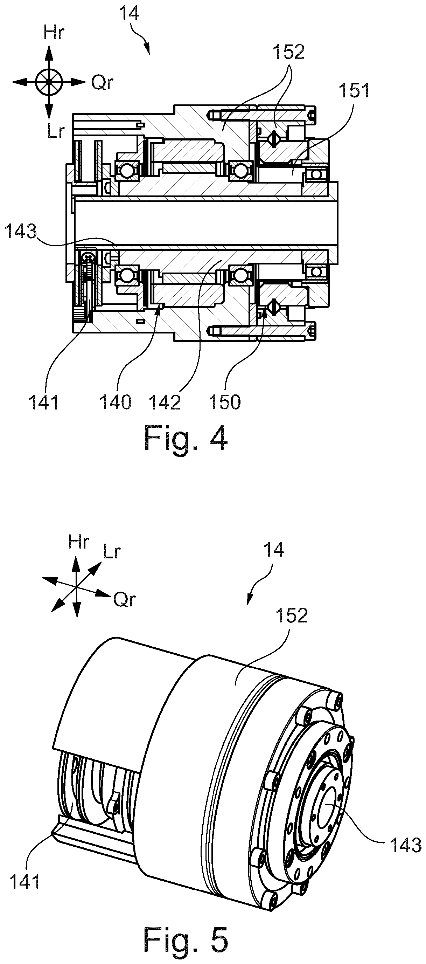

Die Antriebseinrichtung 14 der Linearachse 1 umfasst, wie Fig. 3 und insbesondere die Detailansichten in Fig. 4 und Fig. 5 zeigen, eine Elektromotoreinrichtung 140 und eine Getriebeeinrichtung 150, die als eine Antriebspatrone ausgebildet sind. Die Antriebseinrichtung 14 bildet so eine kompakte Einheit, welche einfach und schnell in der Linearachse 1 eingerichtet und wieder ausgebaut werden kann.

Mittels der Antriebseinrichtung 14 ist der Zahnriemen 15 und der mit diesem mechanisch fest verbundene Schlitten 11 elektromotorisch und bevorzugt untersetzt antreibbar. Hierbei kann eine einzige Antriebseinrichtung 14 und ein passives Umlenkrad für den Zahnriemen 15 oder es können zwei Antriebseinrichtungen 14 mit je einem Antriebsrad für den Zahnriemen 15 zur Anwendung kommen.

Eine prinzipielle Auslegung der Antriebseinrichtung 14 weist einen radial äußeren Getriebeausgang der Getriebeeinrichtung 150 auf, auf dem das Antriebsrad 153 der Antriebseinrichtung 14 für den Zahnriemen 15 sitzt.

Zwischen der Elektromotoreinrichtung 140 und der Getriebeeinrichtung 150 der Antriebseinrichtung 14 befindet sich bevorzugt eine Wellenanordnung der Antriebseinrichtung 14. Die Wellenanordnung weist eine Hohlwelle 142 auf, die vergleichsweise schnell in Bezug auf eine Ausgangsseite 152 der Getriebeeinrichtung 150 rotiert. In der Hohlwelle 142 ist eine gegenüber dem Gehäuse 20 der Linearachse 1 drehfeste Lagerachse 143 eingerichtet ist. Hierbei ist die Hohlwelle 142 auf der drehfesten Lagerachse 143 bevorzugt rotationsgleitgelagert. Es kann auch wenigstens ein Radialwälzlager, d.h. ein Rollenlager, Kugellager, Nadellager etc. zusätzlich verwendet werden.

Eine Eingangsseite 151 der Getriebeeinrichtung 150 ist drehfest mit der Hohlwelle 142 verbunden, womit die Eingangsseite 151 auf der Hohlwelle 142 gelagert ist. Ein Zwischenring der Getriebeeinrichtung 150 kann sich abseits der Elektromotoreinrichtung 140 seitlich an der eigentlichen Getriebeeinrichtung 150 über ein Radialwälzlager auf der drehfesten Lagerachse 143 abstützen. Hierbei kann ein gesonderter Ring zur radial inneren Abstützung vorgesehen sein. Bei einem Spannungswellengetriebe ist solch ein Zwischenring z. B. eine verformbare zylindrische Büchse bzw. eine sogenannte Flexspline. Bei einem Zykloidgetriebe ist dies z. B. eine Zykloidenscheibe.

Eine Ausgangsseite 152 der Getriebeeinrichtung 150 kann sich einerseits zwischen der Elektromotoreinrichtung 140 und der Getriebeeinrichtung 150 z. B. über ein Radialwälzlager auf der Hohlwelle 142 abstützen. Ferner kann sich die Ausgangsseite 152 andererseits jenseits der Elektromotoreinrichtung 140 über ein Radialwälzlager wiederum auf der Hohlwelle 142 oder ggf. auch auf der Lagerachse 143 abstützen. Sämtliche Radialwälzlager können als Rollenlager, Kugellager, Nadellager etc. ausgebildet sein. Ggf. ist statt einem Radialwälzlager auch ein Radialgeleitlager anwendbar.

Die Elektromotoreinrichtung 140 treibt mit ihrer Abtriebsdrehzahl die schnelle Hohlwelle 142 als eine Eingangswelle der Getriebeeinrichtung 150 an, welche deren Antriebsdrehzahl auf eine Abtriebsdrehzahl der Getriebeeinrichtung 150 bzw. der Antriebseinrichtung 14 bevorzugt reduziert. Die Ausgangsseite 152 der Getriebeeinrichtung 150 ist drehfest mit dem Antriebsrad 153 verbunden. Hierbei sitzt das Antriebsrad 153 radial außen auf der Ausgangsseite 152 der Getriebeeinrichtung 150. Bevorzugt sind die Ausgangsseite 152 der Getriebeeinrichtung 150 und das Antriebsrad 153 gegenseitig derart ausgebildet, dass das Antriebsrad 153 bevorzugt einfach von der Ausgangsseite 152 demontiert und wieder montiert werden kann.

Ferner weist die Antriebseinrichtung 14 auf der drehfesten Lagerachse 143 einen bevorzugt als rotatorischen Geber ausgebildeten Kodierer 141 auf.

Zwei mögliche Ausgestaltungen der multifunktionalen Schnittstelle 120 des Schlittens 11 mit der Anschlussseite 114 sind in Fig. 6 und Fig. 7 gezeigt. Die in Fig. 6 gezeigte Ausführung der multifunktionalen Schnittstelle 120 des Schlittens 11 entspricht der auch in Fig. 3 gezeigten Ausführungsform. Die beiden Ausführungsformen der multifunktionalen Schnittstelle 120 sind komplementär zueinander aufgebaut und miteinander koppelbar.

In beiden Ausführungsformen weist die multifunktionale Schnittstelle 120 des Schlittens 11 eine mechanische Schnittstelle auf. Daneben kann die multifunktionale Schnittstelle eine Datensignal-Schnittstelle, eine elektrische Schnittstelle und eine fluidische Schnittstelle umfassen. Hierbei umgrenzt die betreffende mechanische Schnittstelle bevorzugt die anderen Schnittstellen, welche somit radial innerhalb der mechanischen Schnittstelle in der multifunktionalen Schnittstelle 120 eingerichtet sind.

Bei der in Fig. 6 gezeigten ersten Ausführungsform ist die Anschlussseite 114 des Schlittens 11 kreisförmig ausgebildet ist. Umfangsseitig weist die Anschlussseite 114 einen Befestigungsring 132 mit einem Innengewinde auf. Die Anschlussseite 114 umfasst weiter eine vier Zähne aufweisende Stirnverzahnung 133, die als Hirth-Verzahnung ausgebildet ist. Auf der Anschlussseite 114 ist zudem eine Zentrieraufnahme 137 vorgesehen. Der Befestigungsring 132 mit dem Innengewinde und die Stirnverzahnung 133 bilden die mechanische Schnittstelle.

Die Anschlussseite 114 weist ferner eine Kontakteinrichtung auf, die in der ersten Ausführungsform eine Datensignal-Schnittstelleneinrichtung 134, eine elektrische Schnittstelleneinrichtung 135 und eine fluidische Schnittstelleneinrichtung 136 beinhaltet. Die Kontakteinrichtung ist dabei an die Art und die Anzahl der Anschlussseite 114 zugeführten Medien angepasst.

Die Datensignal-Schnittstelleneinrichtung 134 ist auf einer zentralen Achse Ra der Anschlussseite 114 vorgesehen. Die elektrische Schnittstelleneinrichtung 135 ist radial außerhalb der Datensignal-Schnittstelleneinrichtung 134 auf der Anschlussseite 114 angeordnet. Die fluidische Schnittstelleneinrichtung 136 ist wiederum radial außerhalb der elektrischen Schnittstelleneinrichtung 134 auf der Anschlussseite 114 vorgesehen.

Die Datensignal-Schnittstelleneinrichtung 134 ist als ein optischer oder elektrischer Steckverbinder ausgebildet. Die elektrische Schnittstelleneinrichtung 135 umfasst vier elektrische Steckverbinder, die auf einem ersten inneren Kreisumfang liegen. Die fluidische Schnittstelleneinrichtung 136 setzt sich aus vier Fluid-Steckverbindern zusammen, die auf einem zweiten äußeren Kreisumfang angeordnet sind.

Die in Fig. 7 gezeigte zweite Ausführungsform der Anschlussseite 114 erstreckt sich senkrecht zur Rotationsachse Ra und ist kreisförmig ausgebildet. An einer äußeren Umfangsseite der Anschlussseite 114 ist ein Außengewinde 232 angebracht. Die Anschlussseite 114 weist eine sechs Zähne aufweisende Stirnverzahnung 233 auf, die als Hirth-Verzahnung ausgebildet ist. Auf der Anschlussseite 114 ist zudem eine Zentrierstift 237 vorgesehen. Das Außengewinde 232 und die Stirnverzahnung 233 bilden mechanische Verbindungselemente.

Die Anschlussseite 114 umfasst zudem eine Kontakteinrichtung, die in der zweiten Ausführungsform eine Datensignal-Schnittstelleneinrichtung 234, eine elektrische Schnittstelleneinrichtung 235 und eine fluidische Schnittstelleneinrichtung 236 beinhaltet. Die Kontaktierungseinrichtung ist dabei an die Art und die Anzahl der Anschlussseite 114 zugeführten Medien angepasst.

Die Datensignal-Schnittstelleneinrichtung 234 ist auf einer zentralen Achse Ra der Anschlussseite 114 vorgesehen. Die elektrische Schnittstelleneinrichtung 235 ist radial außerhalb der Datensignal-Schnittstelleneinrichtung 234 auf der Anschlussseite 114 angeordnet. Die fluidische Schnittstelleneinrichtung 236 ist wiederum radial außerhalb der elektrischen Schnittstelleneinrichtung 234 auf der Anschlussseite 114 vorgesehen.

Die Datensignal-Schnittstelleneinrichtung 234 ist als Aufnahme für einen optischer Steckverbinder ausgebildet. Die elektrische Schnittstelleneinrichtung 235 umfasst vier Aufnahmen für elektrische Steckverbinder, die auf einem ersten inneren Kreisumfang liegen. Die fluidische Schnittstelleneinrichtung 236 setzt sich aus vier Aufnahmen für Fluid-Steckverbinder zusammen, die auf einem zweiten äußeren Kreisumfang angeordnet sind.

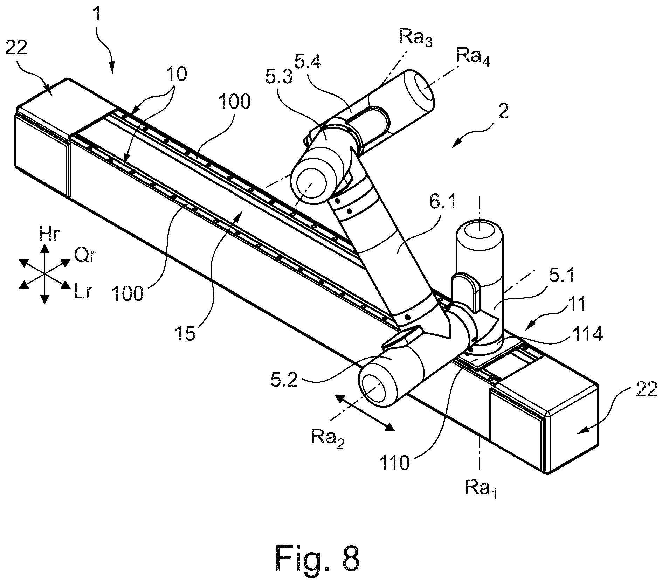

Beim Zusammenbau der multifunktionale Schnittstelle 120 des Schlittens 11 mit einer Abnahmeeinrichtung, beispielsweise einem Roboterarm, wie er in der Fig. 8 gezeigt ist, sind die Anschlussseiten komplementär zueinander aufgebaut und miteinander koppelbar. Die Ausgestaltung der multifunktionalen Schnittstelle 120 des Schlittens 11 mit der Anschlussseite 114 kann dabei beispielsweise der in Fig. 6 gezeigten Ausführungsform entsprechen. Die Anschlussseite der Abnahmeeinrichtung ist dann entsprechend der in Fig. 7 gezeigten Ausführungsform ausgebildet.

Im Folgenden wird ein Verbinden der in Fig. 6 und Fig. 7 gezeigten, komplementär zueinander aufgebauten Anschlussseiten erläutert.

Die Anschlussseite 114 gemäß der Ausführungsform in Fig. 7 wird auf die Anschlussseite 114 gemäß der Ausführungsform in Fig. 6 aufgesetzt. Dabei greift der Zentrierstift 237 in die Zentrieraufnahme 137 ein. Der Zentrierstift 237 und die Zentrieraufnahme 137 dienen so als Kodiereinrichtung. Es könnte aber auch eine anders ausgestaltete Kodierung vorgesehen sein. Eine Kodierung könnte beispielsweise über eine komplementäre Geometrie der Anschlussseiten erfolgen. Ferner erfolgt über den Eingriff des Zentrierstiftes 237 in die Zentrieraufnahme 137 ein Potentialausgleich zwischen den beiden zu verbindenden Elementen, bevor die Kontakteinrichtungen der beiden Anschlussseiten sich berühren, insbesondere die Kontakteinrichtungen zur Übertragung von Datensignalen und elektrischem Strom bzw. elektrischer Spannung sich berühren.

Durch Verdrehung des Befestigungsrings 132 wird das Innengewinde auf das Außengewinde 232 aufgeschraubt, wodurch die Anschlussseiten gemäß Fig. 6 und Fig. 7 aufeinander gepresst werden. Im angepressten Zustand greifen die beiden Stirnverzahnungen 133, 233 derart ineinander ein, dass die Anschlussseiten mechanisch drehmomentschlüssig miteinander verbunden sind. Ferner kontaktiert sich die Kontakteinrichtungen der beiden Anschlussseiten, so dass eine optische, elektrische und fluidische Kopplung zur Übertragung von Datensignalen, elektrischem Strom bzw. elektrischer Spannung und Fluid bereitgestellt ist. Die optische Kopplung erfolgt dabei auf der zentralen Achse, insbesondere der Rotationsachse, der mechanischen Verbindung. Die elektrische Kopplung und die fluidische Kopplung sind radial außerhalb der optischen Kopplung vorgesehen.

Die optische Kopplung erfolgt durch Übertragung zwischen den beiden Datensignal-Schnittstelleneinrichtungen 134, 234, die ineinandergesteckt werden können. Bevorzugt sind die Datensignal-Schnittstelleneinrichtungen dabei als einfach aufgebaute opto- oder elektromechanische Berührverbindungseinrichtungen oder Steckverbindungseinrichtungen ausgebildet.

Die elektrische Kopplung erfolgt durch Übertragung zwischen den beiden elektrischen Schnittstelleneinrichtungen 135, 235, die ineinandergesteckt werden können. Bevorzugt sind die elektrischen Schnittstelleneinrichtungen dabei als einfach aufgebaute elektromechanische Berührverbindungseinrichtungen oder Steckverbindungseinrichtungen ausgebildet.

Die fluidische Kopplung erfolgt durch Übertragung zwischen den beiden fluidischen Schnittstelleneinrichtungen 136, 236, die ineinandergesteckt werden können. Bevorzugt sind die fluidischen Schnittstelleneinrichtungen dabei als einfach aufgebaute fluidmechanische Berührverbindungseinrichtungen oder Steckverbindungseinrichtungen ausgebildet.

In Fig. 8 ist beispielhaft eine Ausführungsform eines Industrieroboters dargestellt. Ein Industrieroboter ist eine automatische Maschine mit mehreren Freiheitsgraden für die Automatisierungstechnik, welcher durch eine vorprogrammierte Steuerung/Regelung verschiedene Funktionen in einer Arbeitsumgebung in (bedingter) Eigenleistung durchführen kann.

Der Industrieroboter umfasst eine Roboterbasis, die von der angetriebene Linearachse 1 gebildet wird, den Roboterarm 2 und einen bevorzugt auswechselbaren Endeffektor, der in Fig. 8 nicht gezeigt ist. Der Endeffektor ist z. B. mit einem Werkzeug, einem Greifer etc. versehen, welcher an einem freien bzw. distalen Ende des Roboterarms 2 angeordnet ist.

Der Roboterarm 2 des Industrieroboters ist modular mit einer Mehrzahl von Armmodulen aufgebaut. Prinzipiell sind die Armmodule beliebig auslegbar, wobei zwischen aktiven Armmodulen 5 und passiven Armmodulen 6 unterschieden werden kann. Ein aktives Armmodul 5 besitzt eine Antriebseinrichtung, mittels welcher ein daran anschließbares weiteres Armmodul rotiert werden kann. Analog dazu weist ein passives Armmodul 6 keine Antriebseinrichtung auf und dient als Verlängerungsteil.

Die Armmodule weisen jeweils zwei Anschlussseiten auf, wobei die aktiven Armmodule 5 L-Form und die passiven Armmodule 6 I-Form besitzen. Die Armmodule können aber auch andere geometrische Form aufweisen.

Die Anschlussseiten der Armmodule sind jeweils korrespondierend, und komplementär oder analog ausgebildet. Eine Anschlussseite eines Armmoduls ist dabei mechanisch, optisch, elektrisch und fluidisch mit einer betreffenden Anschlussseite eines weiteren Armmoduls koppelbar. Bevorzugt besitzen die Anschlussseiten der Armmodule jeweils eine einheitliche, komplementäre Kontaktierungsmimik, die eine Kompatibilität der Armmodule sicherstellt. Bevorzugt weisen die Armmodule dabei jeweils eine Anschlussseite in der in Fig. 6 gezeigten Ausführung und eine Anschlussseite in der in Fig. 7 gezeigten Ausführung auf.

Der Roboterarm 2 in Fig. 8 umfasst vier aktive Armmodul 5 und ein passives Armmodul 6 auf. Der Roboterarm kann sich jedoch aus einer beliebigen Zahl aktiver und passiver Armmodule zusammensetzen. In der Fig. 8 sind die aktiven Armmodule 5 und die passiven Armmodule 6 zur Unterscheidung jeweils mit einer Zusatznummer getrennt durch einen Punkt versehen, wobei ausgehend von der Roboterbasis in Richtung auf das distale Ende nummeriert ist.

Bei dem Roboterarm 2 in der Ausführung in Fig. 8 ist ein erstes aktives Armmoduls 5.1 mit dem Schlitten 11 der angetriebenen Linearachse 1 als Roboterbasis verbunden. An das erste aktive Armmodul 5.1 ist ein zweites aktives Armmodul 5.2 angeschlossen. Zwischen dem zweiten aktiven Armmodul 5.2 und einem dritten aktiven Armmodul 5.3 ist ein passives Armmodul 6.1 angeordnet. An dem dritten aktiven Armmodul 5.3 ist ein viertes aktives Armmodul 5.4 angeschlossen, das das distale Ende des Roboterarms 2 bildet.

Jedes aktive Armmodul 5 bildet eine Bewegungsachse. Der Roboterarm 2 in Fig. 8 besitzt so vier Bewegungsachsen, welche als Rotationsachsen Ra_{n(n=1,..,4)} ausgebildet sind. Dabei lassen sich eine beliebige Anzahl von vollständigen und teilweisen Umdrehungen des jeweiligen aktiven Armmoduls 5 in bevorzugt beide Umfangsrichtungen Ur einer betreffenden Rotationsachse Ra_{n(n=1,..,4)} durchführen. Die Rotationsachsen Ra_{n(n=1,..,4)} sind dabei bevorzugt die ideellen "Gelenke" (Rotationsgelenk, Drehgelenk und/oder Schwenkgelenk) des Roboterarms 2 beispielsweise gegenüber der angetriebenen Linearachse 1. Grundsätzlich kann der Roboterarm zwischen zwei und sechs Bewegungsachsen aufweisen, die durch eine entsprechende Anzahl von aktiven Armmodulen bereitgestellt wird.

Bei den aktiven Armmodulen 5 sind die Anschlussseiten relativ zueinander steuerbar verdrehbar ausgelegt. Weiterhin ist eine optische Rotationsübertragungseinrichtung für eine Rotationsübertragung von Datensignalen zwischen den Anschlussseiten, eine elektrische Rotationsübertragungseinrichtung für eine Rotationsübertragung von elektrischer Energie zwischen den Anschlussseiten und eine fluidische Rotationsübertragungseinrichtung für eine Rotationsübertragung von Fluid zwischen den Anschlussseiten vorgesehen.

### Bezugszeichenliste

- 1: angetriebene Linearachse
- 2: Roboterarm
- 5: Armmodul
- 10: lineare Schienenführung
- 11: Schlitten
- 14: Antriebseinrichtung
- 15: Zahnriemen
- 16: Schleppkette
- 17: plattenförmige Einrichtung
- 20: Gehäuse
- 22: Antriebsgehäuseabschnitt
- 100: Profilschiene
- 110: Führungskörper (Schlitten)
- 112: Laufwagen (Schlitten)
- 114: Anschlussseite (Schlitten)
- 120: multifunktionale Schnittstelle (Schlitten)
- 132: Befestigungsring
- 133: Stirnverzahnung
- 134: optische Schnittstelleneinrichtung
- 135: elektrische Schnittstelleneinrichtung
- 136: fluidische Schnittstelleneinrichtung
- 137: Zentrieraufnahme
- 140: Elektromotoreinrichtung
- 141: Kodierer
- 142: Hohlwelle
- 143: Lagerachse
- 150: Getriebeeinrichtung
- 151: Eingangsseite (Getriebeeinrichtung)
- 152: Ausgangsseite (Getriebeeinrichtung)
- 153: Antriebsrad
- 154: Laufrad
- 232: Außengewinde
- 233: Stirnverzahnung
- 234: optische Schnittstelleneinrichtung
- 235: elektrische Schnittstelleneinrichtung
- 236: fluidische Schnittstelleneinrichtung
- 237: Zentrierstift

## Patentansprüche

1. Angetriebene Linearachse (1) als Roboterbasis mit
einem Gehäuse (20), das eine lineare Schienenführung (10) mit zwei Profilschienen (100) aufweist, auf welcher ein Schlitten (11) mittels einer Transporteinrichtung linear hin- und her bewegbar angeordnet ist,
wobei der Schlitten (11) einen Führungskörper (110) mit zwei seitlichen Laufwagen (112) und eine multifunktionale Schnittstelle (120) aufweist,
wobei der Schlitten (11) zwischen den zwei Profilschienen (100) mittels der zwei seitlichen Laufwagen (112) geführt ist,
wobei die Transporteinrichtung ein im Gehäuse (20) umlaufendes Band (15) umfasst, das über zwei Räder (153, 154) geführt ist, wobei wenigstens ein Rad als Antriebsrad (153) ausgebildet ist,
wobei eine Antriebseinrichtung (14) in einer drehmomentschlüssigen Drehverbindung mit dem Antriebsrad (153) steht,
wobei die multifunktionale Schnittstelle (120) des Schlittens (11) eine Anschlussseite (114) aufweist, die eine mechanische Schnittstelle (132, 133; 232, 233) und eine Medienschnittstelle (134, 135, 136; 234, 235, 236) umfasst, und
wobei innerhalb des Gehäuses (20) wenigstens eine hin- und her bewegbare Medienschleppeinrichtung (16) einen Medienpfad zur Medienschnittstelle (134, 135, 136; 234, 235, 236) führt
**dadurch gekennzeichnet, dass**
die Antriebseinrichtung (14) in Form einer Antriebspatrone innerhalb des Antriebsrads (153) eingerichtet ist.

2. Angetriebene Linearachse (1) gemäß Anspruch 1,
wobei die Antriebseinrichtung (14) eine Elektromotoreinrichtung (140) und eine Getriebeeinrichtung (150) aufweist,
wobei zwischen der Elektromotoreinrichtung (140) und der Getriebeeinrichtung (150) eine Wellenanordnung mit einer Hohlwelle (142) als Abtriebswelle vorgesehen ist, welche rotierbar auf einer gegenüber dem Gehäuse (11) drehfesten Lagerachse (143) der Antriebseinrichtung (14) aufgenommen ist,
wobei eine Eingangsseite (151) der Getriebeeinrichtung (150) drehfest mit der Hohlwelle (142) verbunden ist, und
wobei das Antriebsrad (153) radial außen auf einer Ausgangsseite (152) der Getriebeeinrichtung (150) sitzt und drehfest mit der Ausgangsseite (152) der Getriebeeinrichtung (150) gekoppelt ist.

3. Angetriebene Linearachse (1) gemäß Anspruch 1 oder 2,
wobei die wenigstens eine Schleppkette der Medienschleppeinrichtung (16) zwischen der oberen und der unteren Lage des umlaufenden Bandes (15) im Gehäuse (20) angeordnet ist und auf einer plattenförmigen Einrichtung (17) aufliegt, die seitlich innen am Gehäuse (20) befestigt ist.

4. Angetriebene Linearachse (1) gemäß einem der Ansprüche 1 bis 3,
wobei die Medienschnittstelle der multifunktionalen Schnittstelle (120) eine Datensignal-Schnittstelle (134; 234), eine elektrische Schnittstelle (135; 235) und eine fluidische Schnittstelle (136; 236) umfasst,
wobei die innerhalb des Gehäuses (20) wenigstens eine hin- und her bewegbare Medienschleppeinrichtung (16) einen Datensignalpfad zur Datensignal-Schnittstelle (134; 234), einen Elektropfad zur elektrischen Schnittstelle (135; 235)und einen Fluidpfad zur fluidischen Schnittstelle (136; 236) der multifunktionalen Schnittstelle (120) des Schlittens (11) führt.

5. Angetriebene Linearachse (1) gemäß Anspruch 4,
wobei die Datensignal-Schnittstelle (134; 234), die elektrische Schnittstelle (135; 235) und die fluidische Schnittstelle (136; 236) radial innerhalb der mechanischen Schnittstelle (122) eingerichtet sind,
wobei die Datensignal-Schnittstelle (134; 234) auf einer zentralen Achse (Hr) der mechanischen Schnittstelle vorgesehen ist, und
wobei die elektrische Schnittstelle (135; 235) und die fluidische Schnittstelle (136; 236) radial außerhalb der Datensignal-Schnittstelle (134; 234) vorgesehen sind.

6. Angetriebene Linearachse (1) gemäß einem der Ansprüche 1 bis 5,
wobei die Anschlussseite (114) der multifunktionalen Schnittstelle (120) als eine Anschlussbuchse für eine Anschlussscheibe oder als eine Anschlussscheibe für eine Anschlussbuchse ausgebildet ist.

7. Industrieroboter mit einem Roboterarm (2) und einer angetriebenen Linearachse (1) gemäß einem der vorhergehenden Ansprüche als Roboterbasis, wobei eine Anschlussseite des Roboterarms (2) komplementär der Anschlussseite (114) des Schlittens (11) aufgebaut ist, wobei der Roboterarm (2) mechanisch an den Schlitten (11) der angetriebenen Linearachse (1) angeschlossen ist und signaltechnisch, elektrisch und/oder fluidisch mit dem Schlitten (11) der angetriebenen Linearachse (1) verbunden ist.

8. Industrieroboter gemäß Anspruch 7,
wobei der Roboterarm (2) eine Mehrzahl von Armmodulen (5, 6) aufweist,
wobei wenigstens ein Armmodul als ein aktives Armmodul (5) ausgebildet ist, mittels welchem ein daran angeschlossenes, weiteres Armmodul rotierbar ist.

## Claims

1. Driven linear axis (1) as a robot base, comprising a housing (20) which has a linear rail guide (10) with two profiled rails (100), on which a carriage (11) is arranged such that it can be moved linearly back and forth by means of a transport device,
wherein the carriage (11) has a guide body (110) with two lateral runners (112) and a multifunctional interface (120),
wherein the carriage (11) is guided between the two profiled rails (100) by means of the two lateral runners (112),
wherein the transport device comprises a belt (15) circulating in the housing (20) and guided over two wheels (153, 154), wherein at least one wheel is designed as a drive wheel (153),
wherein a drive device (14) has a torque-locked rotational connection to the drive wheel (153),
wherein the multifunctional interface (120) of the carriage (11) has a connection side (114), which comprises a mechanical interface (132, 133; 232, 233) and a media interface (134, 135, 136; 234, 235, 236), and
wherein, within the housing (20), at least one media-dragging device (16) that can be moved back and forth leads a media path to the media interface (134, 135, 136; 234, 235, 236),
**characterized in that**
the drive device (14) is configured in the form of a drive cartridge within the drive wheel (153).

2. Driven linear axis (1) according to Claim 1,
wherein the drive device (14) has an electric motor device (140) and a gearbox device (150),
wherein a shaft arrangement having a hollow shaft (142) as output shaft is provided between the electric motor device (140) and the gearbox device (150) and is accommodated rotatably on a bearing axle (143) of the drive device (14) that is rotationally fixed with respect to the housing (11),
wherein an input side (151) of the gearbox device (150) is co-rotationally connected to the hollow shaft (142), and
wherein the drive wheel (153) is seated radially on the outside on an output side (152) of the gearbox device (150) and is co-rotationally coupled to the output side (152) of the gearbox device (150).

3. Driven linear axis (1) according to Claim 1 or 2, wherein the at least one drag chain of the media-dragging device (16) is arranged between the upper and the lower layer of the circulating belt (15) in the housing (20) and rests on a plate-shaped device (17) which is fixed laterally to the inside of the housing (20).

4. Driven linear axis (1) according to one of Claims 1 to 3,
wherein the media interface of the multifunctional interface (120) comprises a data signal interface (134; 234), an electrical interface (135; 235) and a fluidic interface (136; 236),
wherein the at least one media-dragging device (16) that can be moved back and forth within the housing (20) leads a data signal path to the data signal interface (134; 234), an electrical path to the electrical interface (135; 235) and a fluidic path to the fluidic interface (136; 236) of the multifunctional interface (120) of the carriage (11).

5. Driven linear axis (1) according to Claim 4,
wherein the data signal interface (134; 234), the electrical interface (135; 235) and the fluidic interface (136; 236) are set up radially within the mechanical interface (122),
wherein the data signal interface (134; 234) is provided on a central axis (Hr) of the mechanical interface, and wherein the electrical interface (135; 235) and the fluidic interface (136; 236) are provided radially outside the data signal interface (134; 234).

6. Driven linear axis (1) according to one of Claims 1 to 5,
wherein the connection side (114) of the multifunctional interface (120) is formed as a connecting socket for a connecting disc or as a connecting disc for a connecting socket.

7. Industrial robot having a robot arm (2) and a driven linear axis (1) according to one of the preceding claims as a robot base, wherein a connection side of the robot arm (2) is constructed so as to be complementary to the connection side (114) of the carriage (11), wherein the robot arm (2) is connected mechanically to the carriage (11) of the driven linear axis (1) and has a signalbased, electrical and/or fluidic connection to the carriage (11) of the driven linear axis (1).

8. Industrial robot according to Claim 7,
wherein the robot arm (2) has a plurality of arm modules (5, 6),
wherein at least one arm module is designed as an active arm module (5) by means of which a further arm module connected thereto can be rotated.

## Revendications

1. Axe linéaire entraîné (1) en tant que base de robot avec
un boîtier (20), qui présente une glissière linéaire (10) avec deux rails profilés (100), sur laquelle un coulisseau (11) est agencé de manière déplaçable linéairement en va-et-vient au moyen d'un dispositif de transport,
le coulisseau (11) présentant un corps de guidage (110) avec deux chariots latéraux (112) et une interface multifonctionnelle (120),
le coulisseau (11) étant guidé entre les deux rails profilés (100) au moyen des deux chariots latéraux (112), le dispositif de transport comprenant une bande (15) circulant dans le boîtier (20), qui est guidée par l'intermédiaire de deux roues (153, 154), au moins une roue étant configurée sous forme de roue d'entraînement (153),
un dispositif d'entraînement (14) étant en liaison de rotation à transmission de couple avec la roue d'entraînement (153),
l'interface multifonctionnelle (120) du coulisseau (11) présentant un côté de raccordement (114) qui comprend une interface mécanique (132, 133 ; 232, 233) et une interface de support (134, 135, 136 ; 234, 235, 236), et à l'intérieur du boîtier (20), au moins un dispositif entraîneur de support (16) déplaçable en va-et-vient guidant un trajet de support vers l'interface de support (134, 135, 136 ; 234, 235, 236),
**caractérisé en ce que**
le dispositif d'entraînement (14) est adapté sous la forme d'une cartouche d'entraînement à l'intérieur de la roue d'entraînement (153).

2. Axe linéaire entraîné (1) selon la revendication 1, le dispositif d'entraînement (14) présentant un dispositif de moteur électrique (140) et un dispositif de transmission (150),
un agencement d'arbre avec un arbre creux (142) en tant qu'arbre mené étant prévu entre le dispositif de moteur électrique (140) et le dispositif de transmission (150), qui est reçu de manière rotative sur un axe de palier (143) du dispositif d'entraînement (14), fixe en rotation par rapport au boîtier (11),
un côté d'entrée (151) du dispositif de transmission (150) étant relié à l'arbre creux (142) de manière fixe en rotation, et
la roue d'entraînement (153) étant placée radialement à l'extérieur sur un côté de sortie (152) du dispositif de transmission (150) et étant couplée de manière fixe en rotation avec le côté de sortie (152) du dispositif de transmission (150).

3. Axe linéaire entraîné (1) selon la revendication 1 ou 2,
l'au moins une chaîne d'entraînement du dispositif entraîneur de support (16) étant agencée entre les couches supérieure et inférieure de la bande en circulation (15) dans le boîtier (20) et reposant sur un dispositif en forme de plaque (17) qui est fixé latéralement à l'intérieur du boîtier (20).

4. Axe linéaire entraîné (1) selon l'une quelconque des revendications 1 à 3,
l'interface de support de l'interface multifonctionnelle (120) comprenant une interface de signal de données (134 ; 234), une interface électrique (135 ; 235) et une interface fluidique (136 ; 236),
l'au moins un dispositif entraîneur de support (16) déplaçable en va-et-vient à l'intérieur du boîtier (20) guidant un trajet de signal de données vers l'interface de signal de données (134 ; 234), un trajet électrique vers l'interface électrique (135 ; 235) et un trajet de fluide vers l'interface fluidique (136 ; 236) de l'interface multifonctionnelle (120) du coulisseau (11).

5. Axe linéaire entraîné (1) selon la revendication 4, l'interface de signal de données (134 ; 234), l'interface électrique (135 ; 235) et l'interface fluidique (136 ; 236) étant adaptées radialement à l'intérieur de l'interface mécanique (122),
l'interface de signal de données (134 ; 234) étant prévue sur un axe central (Hr) de l'interface mécanique, et
l'interface électrique (135 ; 235) et l'interface fluidique (136 ; 236) étant prévues radialement en dehors de l'interface de signal de données (134 ; 234).

6. Axe linéaire entraîné (1) selon l'une quelconque des revendications 1 à 5,
le côté de raccordement (114) de l'interface multifonctionnelle (120) étant configuré sous la forme d'une douille de raccordement pour un disque de raccordement ou sous la forme d'un disque de raccordement pour une douille de raccordement.

7. Robot industriel avec un bras de robot (2) et un axe linéaire entraîné (1) selon l'une quelconque des revendications précédentes en tant que base de robot, un côté de raccordement du bras de robot (2) étant construit de manière complémentaire au côté de raccordement (114) du coulisseau (11), le bras de robot (2) étant raccordé mécaniquement au coulisseau (11) de l'axe linéaire entraîné (1) et étant relié par signal, électriquement et/ou fluidiquement au coulisseau (11) de l'axe linéaire entraîné (1).

8. Robot industriel selon la revendication 7,
le bras de robot (2) présentant une pluralité de modules de bras (5, 6),
au moins un module de bras étant configuré sous la forme d'un module de bras actif (5), au moyen duquel un autre module de bras qui lui est raccordé peut être mis en rotation.
